# EUROPÄISCHE PATENTSCHRIFT

(11) **EP 0 570 870 B1**
(45) Veröffentlichungstag und Bekanntmachung des Hinweises auf die Patenterteilung: **23.10.1996**
(21) Anmeldenummer: 93107936.2
(22) Anmeldetag: 14.05.1993
(51) Int. Cl.: H01H 1/40, H01H 19/58

(54) **Drehwahlschalter zur Anordnung auf einer Leiterplatte eines elektrischen Gerätes**
Rotatable selector switch for mounting on a circuit board of an electrical apparatus
Interrupteur de sélection rotatif pour montage sur une plaquette à circuit d'un appareil électrique

(30) Priorität: 16.05.1992 DE 4216296
(43) Veröffentlichungstag der Anmeldung: 24.11.1993
(73) Patentinhaber: Miele & Cie. GmbH & Co., D-33325 Gütersloh (DE)
(72) Erfinder: Avenwedde, Josef, W-33415 Verl (DE); Meyer- Hertenstein, Werner, W- 33325 Gütersloh (DE); Pfister, Ralf, W-7218 Trossingen (DE)

(56) Entgegenhaltungen:
- DE-A- 3 823 812
- US-A- 3 059 116
- US-A- 3 526 872

## Beschreibung

Die Erfindung betrifft einen Drehwahlschalter zur Anordnung auf einer Leiterplatte eines elektrischen Gerätes, insbesondere eines Haushaltgerätes, welches vorzugsweise mit einer Mikroprozessorsteuerung ausgestattet ist, bestehend aus einer ortsfesten, die Ausgangskonfiguration bzw. die möglichen Schaltzustände vorgebenden Schalteinrichtung und einer drehbaren, den jeweils gewählten Schaltzustand vorgebenden Stelleinrichtung, wobei die Stelleinrichtung von einem Gehäuse umgeben ist, sowie ein Verfahren zur Anordnung eines Drehwahlschalters auf einer Leiterplatte eines elektrischen Gerätes, insbesondere eines Haushaltgerätes, welches vorzugsweise mit einer Mikroprozessorsteuerung ausgestattet ist, wobei der Drehwahlschalter aus einer ortsfesten, die Ausgangskonfiguration bzw. die möglichen Schaltzustände vorgebenden Schalteinrichtung und einer drehbaren, den jeweils gewählten Schaltzustand vorgebenden Stelleinrichtung besteht und wobei die Stelleinrichtung von einem Gehäuse umgeben ist.

Bei der Fertigung von Leiterplatten werden heute wesentliche Fortschritte durch die Oberflächenmontage und Kontaktierung in SMD-Technik erzielt. Bei diesem Verfahren erfolgt die Kontaktierung dadurch, daß mit Masken an den Kontaktstellen der Leiterbahnen Lötpaste aufgebracht wird. Die SMD-Bauelemente, Widerstände, Kondensatoren und IC's werden dann durch Bestückungsautomaten mit ihren Kontaktierungsflächen auf die Lötpaste gedrückt und haften dort. Danach wird die Leiterkarte in einen Reflow-Lötofen gefahren, wo die Lötpaste unter Einwirkung von Infrarotstrahlung schmilzt. Der Vorteil dieses Verfahrens liegt unter anderem in seinem hohen Automatisierungsgrad.

Aus der DE-OS 3823812 ist ein Drehwahlschalter bekannt, bei dem in dessen Gehäuse als Stator eine Leiterkarte mit Schleifkontakten angeordnet ist, die in Kontaktbahnen münden. Diese Kontaktbahnen werden auf der Leiterkarte mit der vorbeschriebenen SMD-Technik kontaktiert und verlötet.

Der Nachteil dieses Schalters besteht darin, daß er gegenüber den anderen Bauteilen eine relativ hohe Masse besitzt. Hierdurch stellt er einen großen thermischen Widerstand dar, welcher dem Lötprozeß sehr viel Wärme entzieht. Beim Verlöten der Schalter-Kontaktbahnen muß daher die Wärmestrahlung des Lötofens vergrößert werden, was zu einer Beschädigung kleinerer Bauteile auf der Leiterplatte führen kann, insbesondere zur Beschädigung von Elektrolytkondensatoren.

Der Erfindung stellt sich somit das Problem, einen Drehwahlschalter nach dem Oberbegriff des Anspruchs 1 zu schaffen, welcher in einer automatischen Fertigungsstraße leicht montierbar ist, bzw. ein Verfahren zur Anordnung eines solchen Drehwahlschalters auf einer Leiterplatte zu offenbaren.

Erfindungsgemäß wird dieses Problem durch einen Drehwahlschalter mit den im Patentanspruch 1 angegebenen Merkmalen sowie durch ein Verfahren mit den im Patentanspruch 21 angegebenen Merkmalen gelöst. Zweckmäßige Weiterbildungen und Ausgestaltungen des Drehwahlschalters ergeben sich aus den nachfolgenden Unteransprüchen.

Die mit der erfindungsgemäßen Ausbildung erreichbaren Vorteile werden durch eine vollkommene Trennung zwischen Schalteinrichtung und Stelleinrichtung erreicht. Hierdurch können die massereichen Bauteile des Schalters erst nach dem Lötvorgang montiert werden.

Ein weiterer Vorteil des erfindungsgemäß ausgebildeten Schalters ergibt sich dadurch, daß der Roboter, der die Stelleinrichtung samt Gehäuse auf die Leiterkarte aufsetzt, nach dem Lötprozeß eingesetzt werden und dann auch noch zum Einsetzen von IC's in Fassungen verwendet werden kann.

Zum anderen benötigt der Schalter keine elektrischen Schleifkontakte, wodurch er verschleißfrei arbeitet und sein Aufbau vereinfacht wird.

In einer vorteilhaften Ausgestaltung besitzt der Drehwahlschalter eine Vorrichtung zur Befestigung auf der Leiterplatte mittels Rastbeinverriegelung, wobei mindestens ein Rastbein durch eine Leiterplattenöffnung geführt und am Rastbein angeordnete Arretiernasen nach anfänglichem elastischen Zurückweichen der Montage die Leiterplatte an der zum Bauelement abgewandten Seite hintergreifen und dieses verankern, und wobei mindestens ein Rastbein einander entgegengestzt gerichtete Rastnasen aufweist und bei der Montage auf Torsion beansprucht ist, wobei die Torsionsachse senkrecht zur Ebene der Trägerplatte verläuft.

Hierbei ergibt sich der Vorteil, daß das Rastbein selbst für den Verriegelungsvorgang auf Torsion beansprucht wird, was im Rückschluß bedeutet, daß ein Lösen auch nur wieder durch eine Torsionseinwirkung, also eine Verdrehung des jeweiligen Rastbeins in sich möglich ist. Eine solche Rastbeinverdrehung ist aber ausgeschlossen und im normalen Betrieb auch nicht zu erwarten, da bei diesem ausschließlich Krafteinwirkungen, durchaus auch stärkerer Natur, auf das Bauelement oder den Bauelement-Trägerkörper selbst auftreten, die zwar möglicherweise auf eine Biegeeinwirkung auch am Rastbein hinwirken. Eine solche Biegeeinwirkung kann jedoch bei der durch die Erfindung vorgeschlagenen neuartigen, auf Torsion beruhenden Verriegelung des jeweiligen Rastbeins nichts ausrichten.

Der Grund hierfür liegt darin, daß im Gegensatz zur klassischen Schnappverbindung, bei welcher die Rastbeine oder Schnapparme oder mit Rastnasen versehene Verlängerungen lediglich ausgelenkt werden, bis die jeweilige untere Arretiernase die Trägerplatte hintergreifen kann, so daß eine Beanspruchung auf Biegung auftritt, die Rastbeine vorliegender Erfindung bei der Montage verdreht werden müssen, und zwar in sich, was einer Beanspruchung auf Torsion entspricht.

Hierbei ist vorteilhaft, daß diese Verdrehung nicht durch manuellen Eingriff der das jeweilige Bauelement montierenden Person erforderlich ist, sondern durch die Gestaltung des jeweiligen Rastbeins automatisch erfolgt, wenn das Bauelement auf seinen Sitz aufgesetzt und nachgedrückt wird.

Die Rastbeingestaltung ist dann so getroffen, daß aufgrund der entgegengesetzt verlaufenden Rastnasenvorsprünge diese nur in dem jeweiligen gemeinsamen Schlitz der Trägerplatte aufgenommen werden können, wenn das die gegenläufigen Rastnasen tragende Rastbein in sich verdreht wird, da eine ledigliche Auslenkung zwar dazu führen könnte, daß eine der Rastnasen in den Schlitz eintauchen und die Trägerplatte hintergreifen könnte, die andere Rastnase aber einem solchen Vorgang gar nicht folgen kann und das Eindringen der Rastbein-Verriegelungsvorsprünge in den Trägerplattenschlitz überhaupt unmöglich machen würde.

Bei der Erfindung ist ferner vorteilhaft, daß nach dem Fügevorgang im montierten Zustand im Platinenschlitz, also in der länglichen Aufnahmeöffnung der Trägerplatte, durch das jeweils eine Rastbein - es können auch mehrere vorhanden sein - beidseitig, und zwar entgegengesetzt Hinterschnitte vorhanden sind, so daß an diesem Rastbein in beliebiger Weise gerüttelt oder gearbeitet werden kann, ohne daß dieses sich aus dem Schlitz zu lösen vermag.

Dabei sind die für eine solche auf Torsion beanspruchte Rastbeinverriegelung aufzubringenden Kosten bei der Herstellung des jeweiligen Bauelements oder eines ein entsprechendes Bauelement aufnehmenden Rastbein-Gehäuses gleich bzw. nicht größer als bei üblicher Rastbeingestaltung, da es für den Spritzgußvorgang unwesentlich ist, ob an einem Rastbein lediglich jeweils nur eine Rastnase oder zwei einander entgegengesetzt gerichtete, zwischen sich einen Abstand aufweisende Rastnasen angeordnet werden.

Dabei gehört auch die durch die Erfindung gewährleistete Torsionsschnappverbindung zu den unmittelbaren Schnappverbindungen mittels Formschluß und benötigt kein Nacharbeiten, nachdem bei der Montage des Bauelements oder sein es aufnehmendes Gehäuse durch entsprechendes einfaches Andrücken auf der es aufnehmenden Trägerplatte befestigt ist.

Die Erfindung ermöglicht daher eine einfache, insbesondere auch automatisierungsgerechte und kostengünstige Montage, wobei durch die neuartige Art und Weise der Schnappverbindung eine sehr gute Verrastung des Bauelements bzw. seines Gehäuses auf der Platine erreicht wird bei extrem hohen Haltekräften, die im Grunde lediglich durch die Materialstärken eine Begrenzung finden.

Durch die in den Unteransprüchen aufgeführten Maßnahmen sind vorteilhafte Weiterbildungen und Verbesserungen die Erfindung möglich. Besonders vorteilhaft ist die Möglichkeit, an den Rastbeinen beidseitig zwischen den einander entgegengesetzt gerichteten Arretiernasen Erhöhungen oder Vorsprünge beliebiger Art anzuordnen, die so in der Lage sind, das jeweilige Rastbein im Platinenschlitz mittig zu fixieren, so daß auch gar keine seitlichen Auslenkungen mehr möglich sind.

Weiterhin vorteilhaft ist die Möglichkeit, angrenzend zu den Rastbeinen oder an beliebiger Stelle im Gehäuse nach unten, also in Richtung auf die Trägerplatte oder Platine federn wirkende Stützarme anzuspritzen, die je nach der (üblicherweise gelegentlich unterschiedlichen) Leiterplattendicke ausgelenkt und somit im verrasteten Zustand der Rastbeine gespannt werden. Durch diese Vorspannung wird verhindert, daß das Schaltergehäuse zwar durch äußere Einflüsse unlösbar, jedoch locker auf der Trägerplatte oder Platine, die bevorzugt eine Leiterplatte ist, sitzt.

Trotz der Torsionsbeanspruchung und der hierdurch erzielten, extrem sicheren Verrastung sind die erforderlichen Einsatzkräfte, also die von einem Bestückungs-Robotor aufzubringenden Montagekräfte nicht höher als bei üblichen klassischen Schnappverbindungen, bei denen federnde Haken auf Biegung beansprucht werden.

Schließlich ist ein besonderer Vorteil der vorliegenden Erfindung, daß zwar ein unwillkürliches Lösen eines Bauelements aus der entsprechenden Trägerplatte praktisch ausgeschlossen ist, durch bewußtes Einwirken auf die Rastbeine, also deren Verdrehung in sich eine Abnahme aber dennoch möglich ist, beispielsweise dann, wenn Bauelemente zwecks Reparatur oder Wartung ausgetauscht oder ersetzt werden müssen.

Die erfindungsgemäße, bevorzugt aus einem geeigneten Kunststoff gefertigten Torsionsschnappverbindung ermöglicht daher die Befestigung des Gehäuses auf beliebigen Träger-, Lager- oder Leiterplatten.

Ausführungsbeispiele der Erfindung sind in den Zeichnungen rein schematisch dargestellt und werden nachstehend näher erläutert. Es zeigen:
- Fig. 1: den erfindungsgemäßen Drehwahlschalter (1) auf einer Leiterplatte (2) in der Seitenansicht;
- Fig. 2: in Draufsicht die Befestigung eines vollständig aus Kunststoff bestehenden Gehäuses (3) auf einer Leiterplatte (2);
- Fig. 3: im Teilausschnitt vergrößert ein von dem Gehäuse (3) ausgehendes und in einen Aufnahmeschlitz der Leiterplatte (2) im endmontierten Zustand sitzendes, auf Torsion beanspruchtes Rastbein, wobei das angrenzende Gehäuse (3) und die Leiterplatte (2) lediglich teilweise dargestellt sind;
- Fig. 4: die gleiche Darstellung der Fig 3, lediglich um 90° verdreht mit Teildarstellungen von Leiterplatte (2) und an diesem befestigten Gehäuse (3);
- Fig. 5: eine Ansicht des in einen Lagerplatten-Aufnahmeschlitz eingebrachten Rastbeins von unten, beispielsweise entsprechend der Darstellung der Fig. 3, Ansicht von unten;
- Fig. 6 und 7: gleichartige Schnittdarstellungen längs der Linie V-V der Fig. 3, wobei sich die Torsionsschnapphaken im maximal ausgelenkten Zustand bei der Montage befinden (Fig. 6) bzw. in der Rastposition;
- Fig. 8: Ausgestaltungen der durch die Erfindung gebotenen Befestigungsmöglichkeit einschließlich der Anordnung von Federarmen zum Ausgleich von Leiterplattentoleranzen bzw. von zusätzlichen Positionierstiften in einer seitlichen Teildarstellung;
- Fig. 9: einen BCD-Code als kreisförmiges Codiermuster;
- Fig. 10 u.11: die Prinzipskizzen zweier vorteilhafter Ausführungsformen des Drehwahlschalters (1) in der Seitenansicht in Explosionsdarstellung;
- Fig. 12: das Gehäuse (3) mit dem Lichtleiter des Drehwahlschalters (1) gemäß Figur 4 in der Draufsicht und
- Fig. 13: den Codeträger des Drehwahlschalters (1) gemäß Figur 4 in der Draufsicht.

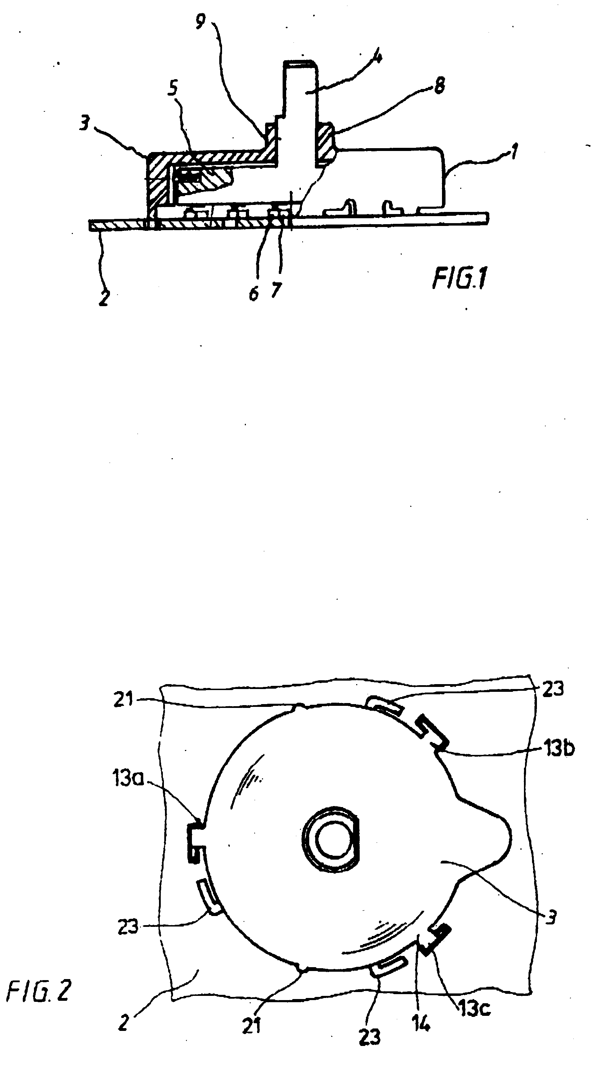

In Fig. 1 ist ein erfindungsgemäßer Drehwahlschalter (1) auf der Leiterplatte (2) eines Steuerteils eines in den Figuren nicht gezeigten Geräts, beispielsweise eines Haushaltgeräts mit einer Mikroprozessorsteuerung, dargestellt. Der Drehwahlschalter (1) besteht im wesentlichen aus folgenden Elementen:
- einer auf der Leiterplatte (2) angeordneten Schalteinrichtung,
- einem vorzugsweise aus Kunststoff gespritzen Gehäuse (3), an welchem Befestigungs- und Positionierelemente angespritzt sind, und
- einer mit einer Schaltwelle (4) versehenen Stelleinrichtung (5).

Die Leiterplatte (2) dient zur Aufnahme elektrischer Bauelemente, insbesondere von SMD-Leuchtdioden (6) und SMD-Fotoempfängern (7) der Lichtsende-/empfangseinrichtung der Schalteinrichtung, aber auch anderen, mit dem Drehwahlschalter (1) in elektrischer Verbindung stehenden Bauelementen. Hierbei handelt es sich auch vorzugsweise um SMD-Bauelemente. Sie werden von Bestückungsautomaten auf der Leiterplatte (2) positioniert und in einer Infrarot-Lötanlage kontaktiert. Die Hauptein-/ausstrahlrichtung der SMD-Leuchtdioden (6) und Fotoempfänger (7) liegt senkrecht zur Ebene der Leiterplatte (2) und ist auf die Stelleinrichtung (5) gerichtet.

Das Gehäuse (3) weist ein angeformtes Achslager (8) für die Schaltwelle (4) der drehbar gelagerten Stelleinrichtung (5) auf. Gehäuse (3) und Stelleinrichtung (5) sind miteinander verbunden und werden als einstückiges Bauteil im Anschluß an die Bestückung der Leiterplatte (2) und dem darauffolgenden Löten durch einen Roboter auf diese aufgesetzt und mittels Torsionsverriegelung verrastet. Das Achslager (8) besitzt an seinem Rand eine definierte Anlagefläche (9), welche einem Roboterwerkzeug ein lagegerechtes Greifen ermöglicht. Eine weitere Hilfe bei der lagegerechten Positionierung des Gehäuses (3) bieten Fixierstege (21), deren Funktion an späterer Stelle beschrieben ist.

In Fig. 2 ist eine mögliche Ausführungsform eines auf einer lediglich im Ausschnitt dargestellten Leiterplatte (2) zu befestigenden Gehäuses (3) dargestellt, welches, lediglich in dem dargestellten Fall und die Erfindung hierdurch nicht beschränkend, mit Hilfe von drei Rastbeinen (13; 13a, 13b, 13c) auf der Leiterplatte (2) befestigt ist.

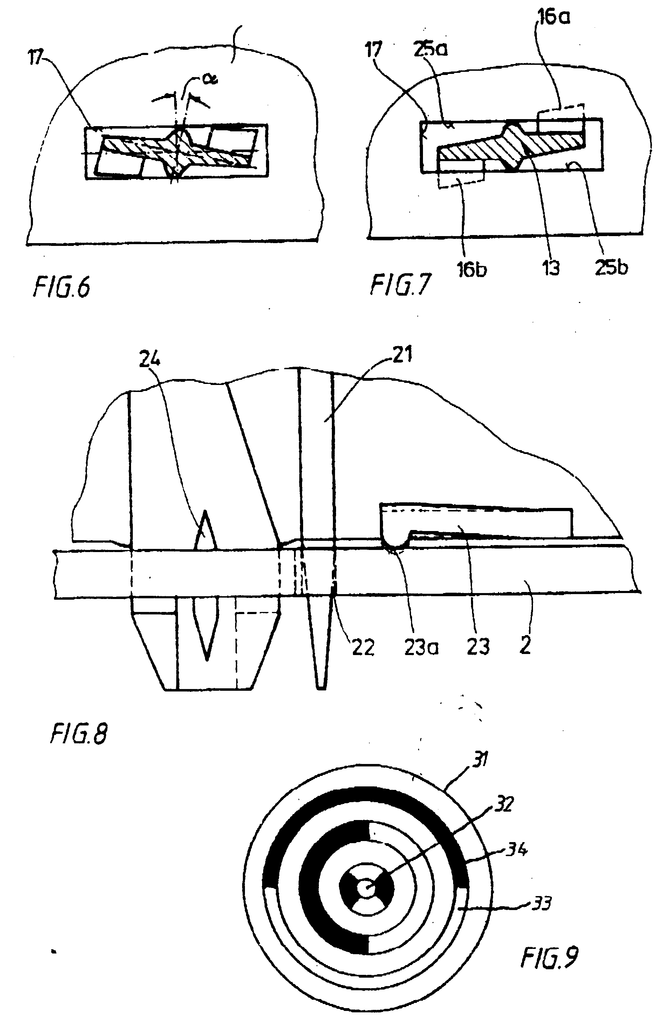

Wie man am besten der Darstellung der Fig. 2 entnehmen kann, sind in diesem dargestellten Fall, die Erfindung ebenfalls nicht einschränkend, die einzelnen Rastbeine (13) so am Gehäuse (3) befestigt, daß vom oberen Gehäusebereich zunächst in etwa horizonzal ein Queransatz (14) abgeht, an dem das Rastbein (13), sich in der Zeichenebene nach unten erstreckend befestigt ist. Jedes Rastbein (13) verfügt über einen Schaft (15), der eine für sich gesehen beliebige Querschnittsform aufweisen kann, also rechteckförmig, rund, oval oder auch in sich ungleichmäßig, an dessem unteren Ende, wie bei sonstigen Rastbeinen grundsätzlich auch bekannt, Rastnasen vorgesehen sind, allerdings mit dem wesentlichen Unterschied, daß in diesem Falle die Rastnasen mit ihren die Leiterplatte (2) von unten hintergreifenden Vorsprüngen in entgegengesetzte Richtungen weisen, wie dies am besten der Darstellung der Fig. 5 (Ansicht der Verrastung von unten) entnommen werden kann, in der zwei, jedenfalls mindestens zwei, Rast- oder Arretiernasen (16a, 16b) vorgesehen sind, die mit ihren Hinterschnitte bildenden Rastvorsprüngen in engegengesetzte Richtung weisen, also einmal bezüglich der Arretiernase (16a) entsprechend dem Pfeil A und bezüglich der Arretiernase (16b) entsprechend dem Pfeil A'.

Es versteht sich, daß die jeweiligen Arretiernasen (16a, 16b) mindestens dort, wo sie bei der Montage längs Wänden des sie aufnehmenden Längsschlitzes (17) in der Leiterplatte (2) entlanggleiten, Schrägflächen (18) aufweisen, so daß infolge der Gegenläufigkeit, also aufgrund des Umstandes, daß diese Schrägflächen (18) auf gegenüberliegenden Seiten des Rastbeins (13) angeordnet sind, notwendigerweise eine Verdrehung desselben resultiert bei der Montage bis in einen maximal ausgelenkten Zustand, der in Fig. 6 dargestellt ist entsprechend maximalen Torsionswinkel α. Bei weiterem Andrücken des entsprechenden Torsions-Rastbeins (13) bzw. des ein oder mehrere solche Rastbeine (13; 13a, 13b, 13c) tragenden Gehäuses (3) kommen die Schrägflächen (18) der beiden Arretiernasen (16a, 16b) im wesentlichen gleichzeitig von den vertikalen Führungswänden des länglichen Leiterplattenschlitzes (17) frei und jedes Rastbein (13) springt in seine in Fig. 5 von unten dargestellte Ausgangs- oder Ruheposition zurück, wobei der Auslenkungswinkelα wieder vollständig aufgezehrt wird.

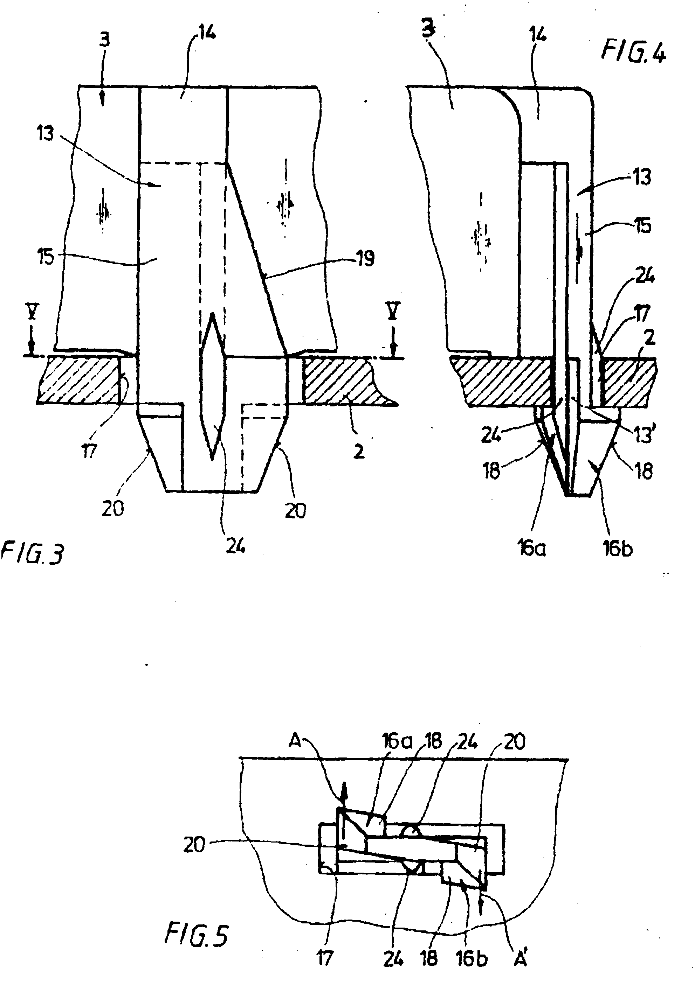

Die Verrastungsposition, die die Arretiernasen (16a, 16b) nach vollendeter Montage einnehmen, ist in Fig. 7 dargestellt aus der Sicht längs der Linie V-V der Fig. 3.

Diese Grundkonzeption einer Torsions-Rastverriegelung ist einer Vielzahl von vorteilhaften Ausgestaltungen und Verbesserungen zugänglich, auf die folgenden eingegangen wird.

Es ist schon erwähnt worden, daß die grundsätzliche Querschnittsform des Rastbeins (13) beliebig sein kann, bei dem dargestellten Ausführungsbeispiel sind die am Queransatz (14) oben angeordneten Rastbeinschäfte im Querschnitt in etwa rechteckförmig, mit der größeren Längserstreckung parallel zur Gehäusewandung, wie Fig. 4 zeigt; sie verjüngen sich jedoch von unten nach oben um 1/3 bis etwa zur Hälfte ihres Querschnitts, wie der aus Fig. 3 erkennbare Verlauf einer schrägen Seitenwandung (19) erkennen läßt. Verengungen im Querschnitt können die Tordierbarkeit der Rastbeinschäfte je nach Wunsch beeinflussen. Diese Verjüngung erklärt auch den in Fig. 2 aus der Draufsicht erkennbaren Umstand, daß die Breite der Schäfte in etwa die Hälfte der Länge der einzelnen Aufnahmeschlitze in der Leiterplatte (2) freiläßt.

Es kann sich ferner als vorteilhaft erweisen, daß die Rastbeine (13)sich vom Quereinsatz (14) oben ausgehend mit ihrer breiten Seite etwa parallel zur angrenzenden Gehäusewandung erstrecken und erst dort, wo der Rastbeinschaft auf die Leiterplatte (2) von oben trifft, ein unteres, die Arretiernasen (16a, 16b) tragendes Teilstück (13') etwas im Winkel zum Rastbein (13) versetzt, also gegenüber diesem verdreht einstückig angesetzt ist, wodurch sich die aus den Fig. 5 und 7 erkennbare Schrägposition der Rastnasen in der montierten Endlage zum sie aufnehmenden Längsschlitz (17) ergibt. Es versteht sich, daß das Rastbein (13) aber auch von Anfang an eine entsprechende Schräglage aufweisen kann oder die Längsschlitze (17) der Leiterplatte (2) sind entsprechend schräg zum Rastbein orientiert.

Wegen der Tordierung ist es tatsächlich sinnvoll, daß man die Rastbeinschäfte so lang wie möglich ausbildet; dies führt dann zu dem seitlichen Ansatz der Schäfte über obere Queransaätze (14) am Gehäuse (3), so daß die Höhe des Gehäuses (3) für die Tordierbarkeit der Schäfte zur Verfügung steht. Es versteht sich, daß dies von dem jeweils verwendeten Material abhängt und natürlich auch Rastbeinschäfte küzerer Länge verwendet werden können.

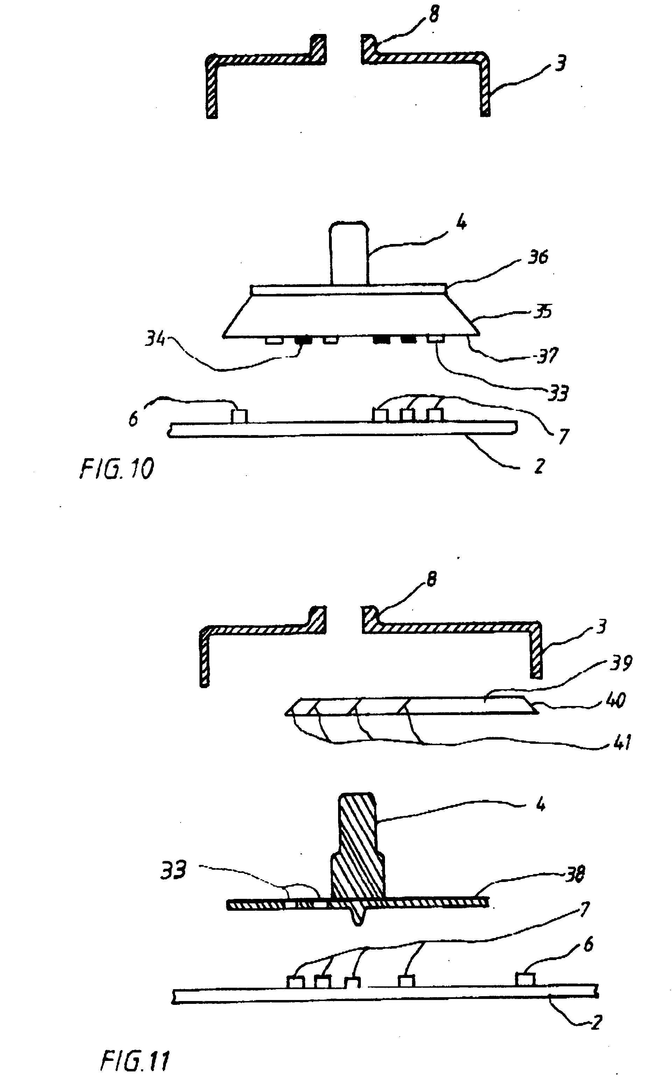

Des weiteren ist es möglich, die Rastnasen auch mit weiteren Schrägflächen zu versehen, die in Fig. 5 gezeigt und mit 20 bezeichnet sind. Hierdurch ergibt sich eine erleichterte Einführung in den Längsschlitz, wie ohne weiteres zu erkennen, wobei hier im übrigen auch, falls gewünscht, mit erheblichen Toleranzen in der Länge der Längsschlitze (17) gearbeitet werden kann, insbesondere dann, wenn man entsprechend einer weiteren vorteilhaften Ausgestaltung vorliegender Erfindung, die in Fig. 8 erkennbar ist, dafür sorgt, daß das zu befestigende Gehäuse (3) durch andere Mittel punktgenau befestigt werden kann.

Hierzu können entsprechend einer Ausgestaltung durch seitlich am Gehäuse (3) angespritzte Fixierstege (21), die sich über die Gehäuseabmessungen nach unten hinaus und sich hierbei gleichzeitig verjüngend weiter erstrecken, Positioniermittel realisiert werden, die zusätzlich zu den Rastbeinen in gesonderte Aufnahmebohrungen (22) der Leiterplatte (2) eingreifen und die Position des Gehäuses unverrückbar festlegen.

Die Fixierstege (21) können sich nach unten verjüngende Rundstege sein, die im Bereich der Gehäusewandung teilweise in diese übergehen.

Eine weitere vorteilhafte Ausgestaltung der Erfindung besteht darin, zusätzliche Federarme (23) für einen Leiterplatten-Dickentoleranzausgleich vorzusehen, die ebenfalls am besten aus den Fig. 2 und 8 erkennbar sind. Diese Federarme können außen am Gehäuse (3) angespritzt oder auch am Gehäuseboden angeordnet sein - außen ergeben sich allerdings bessere Realisierungs- und Funktionsmöglichkeiten - und weisen in der Ruheposition, die in Fig. 8 gestrichelt dargestellt ist, Auflagepunkte auf der Leiterplattenoberfläche auf, die sich unterhalb des Bauelements-Bodens oder -Gehäusebodens befinden.

Beispielsweise können, um hier zum besseren Verständnis mit numerischen Werten zu arbeiten, die die Erfindung aber nicht einschränken, Leiterplatten (2) einer Dicke von 1,5 + 0,14 mm haben, d. h. es ergibt sich ein Größtmaß von 1,64 mm und ein Kleinstmaß von 1,36 mm. Die Rastbeine (13) mit ihren Arretiernasen (16a, 16b) müssen so ausgelegt sein und sind dies auch, daß sie beim Größtmaß von 1,64 mm noch sicher einrasten können, d. h. der Abstand der oberen Rastnasenfläche ist dann so bemessen, daß sich notwendigerweise dann ein Spiel zwischen der Gehäuseunterkante und der Leiterplatte (2) bzw. dem Rasthaken und der Leiterplatte (2) ergibt, wenn die Leiterplattendicke unterhalb ihres Größtmaßes liegt. Ein solches Spiel kann beispielsweise bis zu 0,33 mm betragen.

Die in Figur 2 und 8 gezeigten Federarme (23) gleichen durch ihre Preßwirkung dieses Spiel aus, denn sie sind entsprechend elastisch vorzugweise einstückig am Bauelement oder dessen Gehäuse (3) angespritzt und drücken mit ihrer zum formschlüssigen Anlenkpunkt am Gehäuse (3) entfernten Ansatzspitze oder ihrem Vorsprung (23a) nach unten, so daß sie je nach Leiterplattendicke ausgelenkt und somit gespannt werden. Durch diese Vorspannung der Federarme wird sicher verhindert, daß das Bauelement oder ein entsprechendes Gehäuse (3) lose auf der Leiterplatte (2) sitzt.

Eine weitere vorteilhafte Ausgestaltung vorliegender Erfindung besteht darin, daß zwischen den beiden im unteren Bereich der Rastbeine (13) angeordneten Arretiernasen (16a, 16b) vorzugsweise beidseitig etwa mittig Erhöhungen oder Wulste (24) angeordnet sind, die sich nach oben und unten wieder verlaufen können, wie dies am besten der Darstellung der Fig. 3 entnommen werden kann und die dafür sorgen, daß nach Rückdrehung der Arretiernasen in die Ausgangsruhe- und gleichzeitig Verriegelungsposition dieser Wulste, was am besten der Darstellung der Fig. 7 entnommen werden kann, bündig an den angrenzenden langen Seitenflächen (25a, 25b), des Längsschlitzes (17) zur Anlage kommen, so daß auch in Richtung der Schlitzdicke kein eine Bewegung ermöglichender Freiheitsgrad vorliegt.

Die in Figur 1 dargestellte Stelleinrichtung (5) besteht aus einer planen, kreisförmigen Drehscheibe (31) und einer daran angeformten Schaltwelle (4). Auf der Drehscheibe (31) ist ein Codiermuster (s. Fig. 2) angeordnet, das in Form von konzentrisch zur Achse (32) der Drehscheibe (31) angeordneten Kreisringen ausgebildet ist, welche in ersten Teilbereichen (33) und in zweiten Teilbereichen (34) unterschiedliche optische Eigenschaften besitzen. Das Muster kann beispielsweise einem in Fig. 9 dargstellten BCD-Code, aber auch anderen Binärcodes entsprechen.

Fig. 1 zeigt einen Drehwahlschalter (1), bei dem die Drehscheibe (31) reflektierende erste Teilbereiche (33) sowie nichtreflektierende zweite Teilbereiche (34) besitzt. Diese wirken sowohl als Codierelement als auch als Lichtreflexionselement. Dabei ist jedem Kreisring eine SMD-Leuchtdiode und ein SMD-Fotoempfänger (7) paarweise auf der Leiterplatte (2) zugeordnet. Bei Drehungen der Schaltwelle (4) wird das Codiermuster entsprechend der Schalterstellung über den Leuchtdioden (6) und Fotoempfängern (7) positioniert. Von der Leuchtdiode wird ein Lichtsignal ausgestrahlt. Befindet sich über dieser ein reflektierender erster Teilbereich (33), so wird das Lichtsignal zurückgeworfen und erzeugt ein Spannungssignal am Fotoempfäger. Ein nichtreflektierender Bereich absorbiert das Licht - der Fotoempfänger (7) erzeugt kein Signal. Auf diese Weise entsteht an den Fotoempfängern (7) ein von der Schalterstellung abhängiger Signalcode, der an die Mikroprozessorsteuerung des Haushaltgerätes weitergeleitet wird.

Bei dem Drehwahlschalter (1) gemäß Fig. 10 ist die Drehscheibe (31) als kegelstumpfförmige Lichtleiterscheibe (35) ausgebildet. Auf der der Leiterplatte (2) zugeordneten Fläche sind transparente erste Teilbereiche (33) sowie lichtundurchlässige zweite Teilbereiche (34), beispielsweise in Form des in Fig. 9 dargestellten Codiermusters angeordnet. Die gegenüberliegende Fläche der Lichtleiterscheibe (35) ist als diffuser Reflektor (36) ausgebildet. Das von der Leuchtdiode (6) ausgesandte Licht tritt in die Lichtleiterscheibe (35) ein und wird an deren Rand (37) totalreflektiert. Der diffuse Reflektor (36) sorgt dafür, daß das Licht gestreut, in der ganzen Lichtleiterscheibe (35) verteilt wird und auf der Unterseite der Lichtleiterscheibe (35) in den transparenten ersten Teilbereichen (33) austritt. Somit erzeugt auch hier das austretende Licht an den Fotoempfängern (7) einen von der Schalterstellung abhängigen Signalcode.

Bei einem anderen, in der Zeichnung nicht dargestellten Ausführungsbeispiel ist die Anordnung der in Fig. 10 dargestellten SMD-Leuchtdioden (6) und SMD-Fotoempfänger (7) ausgetauscht. In diesem Fall erfolgt der Lichteintritt in den transparenten ersten Teilbereichen (33) und der Lichtaustritt in den Fotoempfänger (7) am Rand (37) der Lichtleiterscheibe (35). Die Ansteuerung der Leuchtdioden (6) und die Auswertung der Fotoempfängersignale (7) müssen hierbei in einem Zeitmultiplexverfahren erfolgen. Der Vorteil einer solchen dieser Anordnung besteht in einer Kostenersparnis, da im allgemeinen SMD-Leuchtdioden (6) billiger als SMD-Fotoempfänger (7) sind.

Bei den beiden vorgenannten Ausführungsbeispielen ist die Drehscheibe (31) einstückig sowohl als Codierelement als auch als Lichtleitelement ausgebildet. Das Codiermuster kann in einfacher Weise als Bedruckung aufgebracht werden.

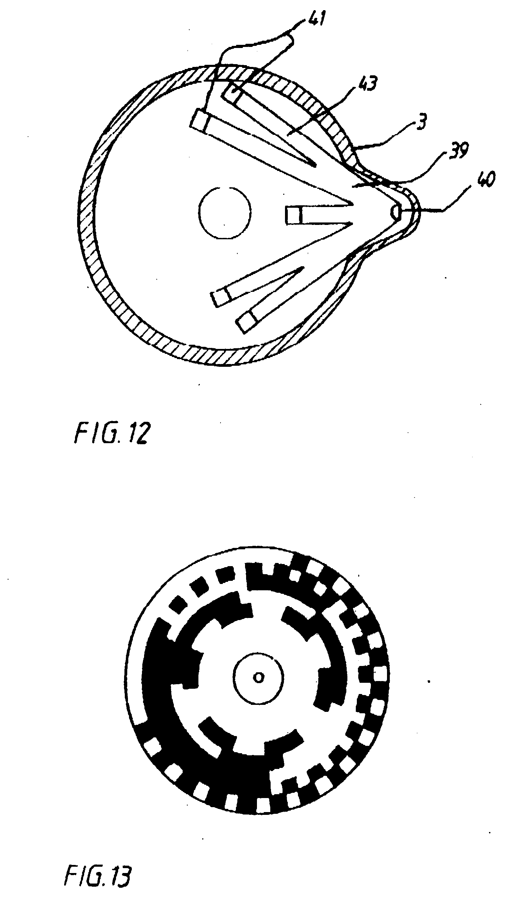

Fig. 11 zeigt einen Drehwahlschalter (1), bei dem die Drehscheibe (31) als gelochte Codescheibe (38), beispielsweise mit einem Codiermuster gemäß Fig. 13 ausgebildet ist. Über dieser Codescheibe (38) befindet sich im Gehäuse (3) ein ortsfestes Lichtleiterelement (39) (s. Fig. 12). Bei diesem laufen mehrere Lichtleiterzweige (43) in einem Vereinigungspunkt (40) zusammen. Die Endpunkte der Lichtleiterzweige (43) besitzen erste, gegenüber der Leiterplattenebene um 45° geneigte Reflektoren (41) in Form einer abgeschrägten Spiegelfläche. Diese sind über auf der Leiterplatte (2) befindlichen SMD-Fotoempfängern (7) angeordneten, wobei Spiegelfläche und Fotoempfänger (7) jeweils einem Kreisring des Codiermusters zugeordnet sind. Der Vereinigungspunkt (40) des Lichtleiterelements (39) ist als zweiter, ebenfalls gegenüber der Leiterplattenebene um 45° geneigter Reflektor (36) ausgebildet und liegt über der SMD-Leuchtdiode in einem Bereich außerhalb der Codescheibe (38). Mit Hilfe des Lichtleiterelementes (39) wird das Licht der Leuchtdiode auf die Fotoempfänger (7) verteilt. Diese können nur dann belichtet werden, wenn über ihnen ein gelochter erster Teilbereich (33) der Codescheibe (38) positioniert ist. Der Vorteil dieser Ausführungsform besteht in einer sehr guten Lichtführung, was den Einsatz von Leuchtdioden (6) mit geringer Leistung ermöglicht.

Bei einfach gestalteten Schaltachsenrastwerken (32) ist es für eine Bedienperson unter Umständen möglich, die Schaltachse (32) in nicht definierten Schaltstellungen zwischen zwei Rastungen zu positionieren. Wenn diese Schaltstellungen entsprechend codiert sind, beispielsweise durch ein Codiermuster gemäß Fig. 9, können sie als Fehleinstellung von einem Mikroprozessor erkannt werden.

## Patentansprüche

1. Drehwahlschalter zur Anordnung auf einer Leiterplatte eines elektrischen Gerätes, insbesondere eines Haushaltgerätes, welches vorzugsweise mit einer Mikroprozessorsteuerung ausgestattet ist, bestehend aus einer ortsfesten, die Ausgangskonfiguration bzw. die möglichen Schaltzustände vorgebenden Schalteinrichtung und einer drehbaren, den jeweils gewählten Schaltzustand vorgebenden Stelleinrichtung (5), wobei die Stelleinrichtung (5) von einem Gehäuse umgeben ist,
dadurch gekennzeichnet,
- daß die Schalteinrichtung aus einer auf der Leiterplatte (2) elektrisch kontaktierten Lichtsende-/empfangseinrichtung besteht,
- daß die Stelleinrichtung (5) als in den Strahlengang der Lichtsende-/empfangseinrichtung eingreifendes Codierelement ausgebildet ist,
- daß im Gehäuse (3) oder an der Stelleinrichtung (5) ein den Lichtweg zwischen Lichtsende- und Lichtempfangseinrichtung beeinflussendes Lichtreflexions- oder Lichtleitelement angeordnet ist,
- daß die Stelleinrichtung (5) bzw. das Gehäuse (3) unabhängig von der Schalteinrichtung auf die Leiterplatte (2) montierbar ist.

2. Drehwahlschalter nach einem der Anspruch 1,
dadurch gekennzeichnet,
daß die Lichtsende-/empfangseinrichtung aus mindestens einer SMD-Leuchtdiode und aus mindestens einem SMD-Fotoempfänger (7) besteht, deren Haupt-Ein/Ausstrahlungsrichtungen senkrecht zur Leiterplattenebene liegen.

3. Drehwahlschalter nach einem der Ansprüche 1 bis 3,
dadurch gekennzeichnet,
daß die Stelleinrichtung (5) eine Drehscheibe (31) mit einem Codiermuster besitzt, wobei das Codiermuster in Form von konzentrisch zur Achse (32) der Scheibe angeordneten Kreisringen ausgebildet ist, welche in ersten Teilbereichen (33) und in zweiten Teilbereichen (34) unterschiedliche optische Eigenschaften besitzen.

4. Drehwahlschalter nach Anspruch 3,
dadurch gekennzeichnet,
daß die Drehscheibe (31) reflektierende erste Teilbereiche (33) sowie nichtreflektierende zweite Teilbereiche (34) besitzt, welche sowohl als Codierelement als auch als Lichtreflexionselement wirken, und daß jedem Kreisring eine Leuchtdiode und ein Fotoempfänger (7) auf der Leiterplatte (2) zugeordnet ist.

5. Drehwahlschalter nach Anspruch 3,
dadurch gekennzeichnet,
daß die Drehscheibe (31) als kegelstumpfförmige Lichtleiterscheibe (35) mit transparenten ersten Teilbereichen (33) und lichtundurchlässigen zweiten Teilbereichen (34) auf der der Leiterplatte (2) zugeordneten Fläche und mit einem diffusen Reflektor (36) auf der der Leiterplatte (2) gegenüberliegenden Fläche ausgebildet ist.

6. Drehwahlschalter nach Anspruch 5,
dadurch gekennzeichnet,
daß jedem Kreisring ein SMD-Fotoempfänger (7) und dem Randbereich (37) der Lichtleiterscheibe (35) eine SMD-Leuchtdiode zugeordnet ist.

7. Drehwahlschalter nach Anspruch 5,
dadurch gekennzeichnet,
daß jedem Kreisring eine SMD-Leuchtdiode und dem Randbereich (37) der Lichtleiterscheibe (35) ein SMD-Fotoempfänger (7) zugeordnet ist und daß die SMD-Leuchtdioden (6) in einem Zeitmultiplexverfahren nacheinander periodisches angesteuert werden.

8. Drehwahlschalter nach Anspruch 3,
dadurch gekennzeichnet,
daß die Drehscheibe (31) in ersten Teilbereichen (33) mit Aussparungen versehenen ist und daß auf über der der Leiterplatte (2) gegenüberliegenden Seite der Drehscheibe (31) ein am Gehäuse (3) befestigtes Lichtleiterelement (39) angeordnet ist.

9. Drehwahlschalter nach den Anspruch 8,
dadurch gekennzeichnet,
daß das Lichtleiterelement (39) in einem Vereinigungspunkt (40) zusammenlaufende Lichtleiterzweige mit als ersten Reflektoren (41) ausgebildeten Endpunkten besitzt, daß der Vereinigungspunkt (40) außerhalb des von der Drehscheibe (31) überdeckten Bereichs liegt und als zweiter Reflektor (42) ausgebildet ist und daß die ersten Reflektoren (41) jeweils einem Kreisring zugeordnet sind.

10. Drehwahlschalter nach Anspruch 8 oder 9,
dadurch gekennzeichnet,
daß jedem ersten Reflektor (41) des Lichtleiterelementes (39) ein SMD-Fotoempfänger (7) und dem zweiten Reflektor (42) eine SMD-Leuchtdiode zugeordnet ist.

11. Drehwahlschalter nach Anspruch 8 oder 9,
dadurch gekennzeichnet,
daß jedem ersten Reflektor (41) des Lichtleiterelementes (39) eine SMD-Leuchtdiode und dem zweiten Reflektor (42) ein SMD-Fotoempfänger (7) zugeordnet ist und daß die SMD-Leuchtdioden (6) in einem Zeitmultiplexverfahren nacheinander periodisch angesteuert werden.

12. Drehwahlschalter nach einem der Ansprüche 1 bis 11,
gekennzeichnet durch eine Vorrichtung zur Befestigung auf der Leiterplatte (2) mittels Rastbeinverriegelung, wobei mindestens ein Rastbein (13) durch eine Leiterplattenöffnung geführt und am Rastbein angeordnete Arretiernasen (16a, 16b) nach anfänglichem elastischen Zurückweichen bei der Montage die Leiterplatte (2) an der zum Bauelement abgewandten Seite hintergreifen und dieses verankern, und wobei mindestens ein Rastbein (13) einander entgegengestzt gerichtete Rastnasen aufweist und bei der Montage auf Torsion beansprucht ist, wobei die Torsionsachse (32) senkrecht zur Ebene der Trägerplatte verläuft.

13. Drehwahlschalter nach einem der Ansprüche 1 bis 12,
dadurch gekennzeichnet,
daß die mindestens zwei entgegengesetzt gerichteten Arretiernasen (16a, 16b) am unteren Ende jedes Rastbeins (13) relativ starr und unbeweglich im Abstand zueinander an entgegengesetzten Enden entsprechend der Längsöffnung des Aufnahmeschlitzes in der Leiterplatte (2) angeordnet sind und jedes Rastbein (13) in der Ausgangsruhestellung, die nach Montage der Rastposition entspricht, eine gegenüber der Längserstreckung des Aufnahmeschlitzes verdrehte Position aufweist.

14. Drehwahlschalter nach Anspruch 12 oder 13,
dadurch gekennzeichnet,
daß die zueinander im Abstand und auf entgegengesetzten Seiten des Rastbeinschaftes angeordneten mindestens zwei Arretiernasen (16a, 16b) mit ihren Arretiervorsprüngen in diametral entgegengesetzte Richtungen weisen.

15. Drehwahlschalter nach einem der Ansprüche 12 bis 14,
dadurch gekennzeichnet,
daß die an die Längsschlitzwandungen des Aufnahmeschlitzes der Leiterplatte (2) angrenzenden Rastnasenflächen derart schräg verlaufen, daß bei der Montage die Arretiernasen (16a, 16b) mit ihren entgegengesetzt gerichteten Schrägflächen (18) an den Aufnahmeschlitzwandungen entlanggleiten bei zunehmender Tordierung der ursprünglichen Rastbein-Drehposition und anschließendem Rückdrehen jedes Rastbeins (13) aus seiner montagebedingten Tordierposition bei gleichzeitigem Hintergreifen gegenüberliegender und zueinander einen Abstand aufweisender Trägerplatten-Rückfächenbereiche durch die Rastnasenvorsprünge.

16. Drehwahlschalter nach einem der Ansprüche 12 bis 15,
dadurch gekennzeichnet,
daß in dem die Arretiernasen (16a, 16b) tragenden Endstück des Rastbeins (13) in Querrichtung weisende Verdickungen oder Wüste (24) angeordnet sind, die im verrasteten Ruhezustand jedes Rastbeins (13) dieses in der schlitzförmigen Aufnahmeöffnung bündig mittig fixieren.

17. Drehwahlschalter nach einem der Ansprüche 12 bis 16,
dadurch gekennzeichnet,
daß die Rastbeine (13) mit Schäften außen am Bauelement oder dessen Gehäuse (3) über obere Queransätze befestigt sind und so eine die Tordierbarkeit gewährleistende größere Länge aufweisen.

18. Drehwahlschalter nach einem der Ansprüche 12 bis 17,
dadurch gekennzeichnet,
daß die Querschnittform jedes Rastbeins (13) rechteckig ist und sich nach oben verjüngt.

19. Drehwahlschalter nach einem der Ansprüche 12 bis 18,
dadurch gekennzeichnet, daß am Bauelement und/oder am dieses aufnehmenden Gehäuse (3) Federarme (23) angeordnet sind, welche im verrasteten Zustand eine Vorspannung nach unten ausüben.

20. Drehwahlschalter nach Anspruch 19,
dadurch gekennzeichnet,
daß die Federarme (23) horizontal verlaufend einstückig am Bauelement oder Gehäuse (3) angespritzt sind und im Ruhezustand mit einem Vorsprung eine untere Bauelement-Begrenzungsfläche derart überragen, daß sie im verrasteten Zustand auf der Trägerplatten-Oberlfäche unter Vorspannung aufliegen.

21. Verfahren zur Anordnung eines Drehwahlschalters auf einer Leiterplatte (2) eines elektrischen Gerätes, insbesondere eines Haushaltgerätes, welches vorzugsweise mit einer Mikroprozessorsteuerung ausgestattet ist, wobei der Drehwahlschalter aus einer ortsfesten, die Ausgangskonfiguration bzw. die möglichen Schaltzustände vorgebenden Schalteinrichtung und einer drehbaren, den jeweils gewählten Schaltzustand vorgebenden Stelleinrichtung (5) besteht und wobei die Stelleinrichtung (5) von einem Gehäuse (3) umgeben ist, gekennzeichnet durch folgende Schritte:
- Bestückung der Leiterplatte (2) mit der Schalteinrichtung, wobei diese aus mindestens einer SMD-Leuchtdiode und mindestens einem SMD-Fotoempfänger (7), deren Haupt-Ein/Ausstrahlrichtungen senkrecht zur Leiterplattenebene liegen, besteht,
- Verlöten der mindestens einen SMD-Leuchtdiode und des mindestens einen SMD-Fotoempfängers (7) in einem an sich bekannten Infrarot-Lötverfahren,
- Montieren der Stelleinrichtung (5) bzw. des Gehäuses (3), wobei diese als in den Strahlengang der Lichtsende-/empfangseinrichtung eingreifendes Codierelement ausgebildet ist und wobei im Gehäuse (3) oder an der Stelleinrichtung (5) ein den Lichtweg zwischen Lichtsende- und Lichtempfangseinrichtung beeinflussendes Lichtreflexions- oder Lichtelement angeordnet ist.

## Claims

1. Rotatable selector switch to be disposed on a printed circuit board of an electrical appliance, more especially a domestic appliance, which is preferably provided with a microprocessor control, comprising a fixed switching means, which predetermines the initial configuration, or respectively the possible switching positions, and a rotatable operating device (5), which predetermines the respectively selected switching position, the operating device (5) being surrounded by a housing, characterised
- in that the switching means comprises a light-transmitting/-receiving means, which is electrically contacted on the printed circuit board (2),
- in that the operating device (5) is configured as a coded element, which engages in the path of rays of the light-transmitting/-receiving means,
- in that a light-reflecting or light-conducting element, which influences the path of light between the light-transmitting and light-receiving means, is disposed in the housing (3) or on the operating device (5), and
- in that the operating device (5), or respectively the housing (3), is mountable on the printed circuit board (2) independently of the switching means.

2. Rotatable selector switch according to claim 1, characterised in that the light-transmitting/-receiving means comprises at least one SMD light-emitting diode and at least one SMD photoelectric receiver (7), the main irradiating/emitting directions of said component parts lying perpendicular to the plane of the printed circuit board.

3. Rotatable selector switch according to one of claims 1 to 3, characterised in that the operating device (5) has a rotatable disc (31) with a coded pattern, the coded pattern being in the form of circular rings, which are disposed concentrically relative to the axis (32) of the disc and have variable optical properties in first portions (33) and in second portions (34).

4. Rotatable selector switch according to claim 3, characterised in that the rotatable disc (31) has reflecting first portions (33) and non-reflecting second portions (34), which act both as a coded element and as a light-reflecting element, and in that a light-emitting diode and a photoelectric receiver (7) are associated with each circular ring on the printed circuit board (2).

5. Rotatable selector switch according to claim 3, characterised in that the rotatable disc (31) is configured as a truncated conical photoconductor disc (35) having transparent first portions (33) and light-impermeable second portions (34) on the surface associated with the printed circuit board (2) and having a diffuse reflector (36) on the surface situated opposite the printed circuit board (2).

6. Rotatable selector switch according to claim 5, characterised in that an SMD photoelectric receiver (7) is associated with each circular ring, and an SMD light-emitting diode is associated with the edge region (37) of the photoconductor disc (35).

7. Rotatable selector switch according to claim 5, characterised in that an SMD light-emitting diode is associated with each circular ring, and an SMD photoelectric receiver (7) is associated with the edge region (37) of the photoconductor disc (35), and in that the SMD light-emitting diodes (6) are actuated periodically in succession in a time-multiplexing process.

8. Rotatable selector switch according to claim 3, characterised in that the rotatable disc (31) is provided with recesses in first portions (33), and in that a photoconductor element (39), which is mounted on the housing (3), is disposed on the side of the rotatable disc (31) situated opposite the printed circuit board (2).

9. Rotatable selector switch according to claim 8, characterised in that the photoconductor element (39) has photoconductor branches, which converge at a junction (40) and have end points configured as first reflectors (41), in that the junction (40) lies externally of the region covered by the rotatable disc (31) and is configured as second reflector (42), and in that the first reflectors (41) are each associated with a respective circular ring.

10. Rotatable selector switch according to claim 8 or 9, characterised in that an SMD photoelectric receiver (7) is associated with each first reflector (41) of the photoconductor element (39), and an SMD light-emitting diode is associated with the second reflector (42).

11. Rotatable selector switch according to claim 8 or 9, characterised in that an SMD light-emitting diode is associated with each first reflector (41) of the photoconductor element (39), and an SMD photoelectric receiver (7) is associated with the second reflector (42), and in that the SMD light-emitting diodes (6) are actuated periodically in succession in a time-multiplexing process.

12. Rotatable selector switch according to one of claims 1 to 11, characterised by a device for securement on the printed circuit board (2) by means of a detent leg locking means, at least one detent leg (13) being guided through an opening in the printed circuit board, and retaining projections (16a, 16b) disposed on the detent leg engage behind the printed circuit board (2) on the side remote from the structural element, after initial resilient yielding during the assembly process, and secure said element, and at least one detent leg (13) having detents, which are orientated in opposite directions to one another, and being twisted during the assembly process, the torsional axis (32) extending perpendicular to the plane of the carrier plate.

13. Rotatable selector switch according to one of claims 1 to 12, characterised in that the oppositely orientated retaining projections (16a, 16b), at least two, are disposed on the lower end of each detent leg (13) in a relatively rigid and non-displaceable manner at a spacing from one another at oppositely situated ends corresponding to the elongate opening of the receiving slot in the printed circuit board (2), and each detent leg (13) has a position, which is twisted round relative to the longitudinal extension of the receiving slot, in the initial position of rest, which corresponds to the locking position after assembly.

14. Rotatable selector switch according to claim 12 or 13, characterised in that the retaining projections (16a, 16b), at least two, which are disposed with a spacing therebetween and on oppositely situated sides of the detent leg shaft, point with their retaining projection members in diametrically opposed directions.

15. Rotatable selector switch according to one of claims 12 to 14, characterised in that the detent faces, which abut against the elongate slot walls of the receiving slot in the printed circuit board (2), extend inclinedly in such a manner that, during the assembly process, the retaining projections (16a, 16b) slide with their oppositely orientated inclined faces (18) along the receiving slot walls with an increasing twisting of the original rotary position of the detent leg and with each detent leg (13) subsequently returning from its torsional position, occasioned by the assembly process, with the detent projection members simultaneously engaging behind oppositely situated carrier plate rear surface regions which are spaced from one another.

16. Rotatable selector switch according to one of claims 12 to 15, characterised in that thickened portions or beads (24), which point in the transverse direction, are disposed in the end-piece of the detent leg (13) supporting the retaining projections (16a, 16b) and, when each detent leg (13) is in its locked position of rest, said leg is centrally secured by said beads in a flush manner in the slot-like receiving opening.

17. Rotatable selector switch according to one of claims 12 to 16, characterised in that the detent legs (13) are secured by shafts externally on the structural element or on the housing (3) thereof via upper transverse extensions and thus have a greater length which ensures twistability.

18. Rotatable selector switch according to one of claims 12 to 17, characterised in that the cross-sectional form of each detent leg (13) is rectangular and tapers upwardly.

19. Rotatable selector switch according to one of claims 12 to 18, characterised in that resilient arms (23) are disposed on the structural element and/or on the housing (3) accommodating said element and exert an initial tension downwardly in the locked position.

20. Rotatable selector switch according to claim 19, characterised in that the resilient arms (23) are injection-moulded integrally with the structural element or housing (3) so as to extend horizontally and, in the position of rest, protrude with a projection member beyond a lower structural element boundary face in such a manner that, in the locked state, they lie on the carrier plate surface under initial tension.

21. Method of disposing a rotatable selector switch on a printed circuit board (2) of an electrical appliance, more especially a domestic appliance, which is preferably provided with a microprocessor control, the rotatable selector switch comprising a fixed switching means, which predetermines the initial configuration, or respectively the possible switching positions, and a rotatable operating device (5), which predetermines the respectively selected switching position, and the operating device (5) being surrounded by a housing (3), characterised by the following steps:
- providing the printed circuit board (2) with the switching means, said means comprising at least one SMD light-emitting diode and at least one SMD photoelectric receiver (7), the main irradiating/emitting directions of said component parts lying perpendicular to the plane of the printed circuit board,
- soldering at least one SMD light-emitting diode and at least one SMD photoelectric receiver (7) in an infrared soldering process known per se, and
- mounting the operating device (5), or respectively the housing (3), said device being configured as a coded element, which engages in the path of rays of the light-transmitting/-receiving means, and a light-reflecting or ligh-conducting element, which influences the path of light between the light-transmitting and light-receiving means, being disposed in the housing (3) or on the operating device (5).

## Revendications

1. Commutateur-sélecteur pour montage sur une plaque à circuit imprimé d'un appareil électrique, en particulier d'un appareil ménager, qui est de préférence équipé d'une commande par microprocesseur, constitué d'un dispositif de commutation stationnaire préfixant la configuration de départ ou les états de commutation possibles et d'un dispositif de manoeuvre (5) rotatif préfixant l'état de commutation choisi chaque fois, le dispositif de manoeuvre (5) étant entouré d'un boîtier, caractérisé en ce
- que le dispositif de commutation consiste en un dispositif d'émission/réception de lumière connecté à la plaque à circuit imprimé (2),
- que le dispositif de manoeuvre (5) est réalisé comme un élément de codage interposé dans la marche des rayons du dispositif d'émission/réception de lumière,
- qu'un élément réfléchissant ou conduisant la lumière et influençant le trajet de la lumière entre le dispositif d'émission de lumière et le dispositif de réception de lumière, est placé à l'intérieur du boîtier (3) ou sur le dispositif de manoeuvre (5), et
- que le dispositif de manoeuvre (5) ou le boîtier (3) peut être monté indépendamment du dispositif de commutation sur la plaque à circuit imprimé (2).

2. Commutateur-sélecteur selon la revendication 1, caractérisé en ce que le dispositif d'émission/réception de lumière est formé d'au moins une diode électroluminescente pour montage en surface et d'au moins un photodétecteur (7) pour montage en surface, dont les directions principales d'entrée et de sortie du rayonnement sont perpendiculaires au plan de la plaque à circuit imprimé.

3. Commutateur-sélecteur selon la revendication 1 ou 2, caractérisé en ce que le dispositif de manoeuvre (5) possède un disque tournant (31) portant un motif de codage, lequel motif est réalisé sous la forme d'anneaux de cercle disposés concentriquement à l'axe (32) du disque et possédant des propriétés optiques différentes dans des premières zones partielles (33) et des secondes zones partielles (34).

4. Commutateur-sélecteur selon la revendication 3, caractérisé en ce que le disque tournant (31) possède des premières zones partielles (33) réfléchissantes ainsi que des secondes zones partielles (34) non réfléchissantes, qui agissent à la fois comme élément de codage et comme élément réfléchissant la lumière, et qu'à chaque anneau de cercle sont coordonnés, sur la plaque à circuit imprimé (2), une diode électroluminescente et un photodétecteur (7).

5. Commutateur-sélecteur selon la revendication 3, caractérisé en ce que le disque tournant (31) est réalisé comme un disque conducteur de lumière (35) de forme tronconique, possédant des premières zones partielles (33) transparentes et des secondes zones partielles (34) opaques sur la face coordonnée à la plaque à circuit imprimé (2), de même qu'un réflecteur diffus (36) sur la face située à l'opposé de cette plaque (2).

6. Commutateur-sélecteur selon la revendication 5, caractérisé en ce qu'un photodétecteur (7) pour montage en surface est coordonné à chaque anneau de cercle et une diode électroluminescente pour montage en surface est coordonnée à la zone du bord (37) du disque conducteur de lumière (35).

7. Commutateur-sélecteur selon la revendication 5, caractérisé en ce qu'une diode électroluminescente pour montage en surface est coordonnée à chaque anneau de cercle et un photodétecteur (7) pour montage en surface est coordonné à la zone du bord (37) du disque conducteur de lumière (35), et que les diodes électroluminescentes (6) sont pilotées périodiquement, l'une après l'autre, selon un procédé de multiplexage dans le temps.

8. Commutateur-sélecteur selon la revendication 3, caractérisé en ce que le disque tournant (31) est pourvu d'évidements dans des premières zones partielles (33) et qu'un élément conducteur de lumière (39), fixé au boîtier (3), est disposé sur le côté du disque tournant (31) situé à l'opposé de la plaque à circuit imprimé (2).

9. Commutateur-sélecteur seLon la revendication 8, caractérisé en ce que l'élément conducteur de lumière (39) possède des branches conductrices de lumière qui se réunissent en un point de rassemblement (40), avec des points terminaux réalisés comme des premiers réflecteurs (41), que le point de rassemblement (40) est situé en dehors de la zone couverte par le disque tournant (31) et réalisé comme un second réflecteur (42), et que les premiers réflecteurs (41) sont coordonnés chacun à un anneau de cercle.

10. Commutateur-sélecteur selon la revendication 8 ou 9, caractérisé en ce qu'un photodétecteur (7) pour montage en surface est coordonné à chaque premier réflecteur (41) de l'élément conducteur de lumière (39) et une diode électroluminescente pour montage en surface est coordonnée au second réflecteur (42).

11. Commutateur-sélecteur selon la revendication 8 ou 9, caractérisé en ce qu'une diode électroluminescente pour montage en surface est coordonnée à chaque premier réflecteur (41) de l'élément conducteur de lumière (39) et un photodétecteur (7) pour montage en surface est coordonné au second réflecteur (42), et que les diodes électroluminescentes (6) sont pilotées périodiquement, l'une après l'autre, selon un procédé de multiplexage dans le temps.

12. Commutateur-selecteur selon une des revendications 1 à 11, caractérisé par un dispositif pour sa fixation sur la plaque à circuit imprimé (2) au moyen d'un verrouillage par patte d'arrêt, dispositif qui comprend au moins une patte d'arrêt (13) passée à travers une ouverture de la plaque à circuit imprimé et des saillies de verrouillage (16a, 16b), disposées sur la patte d'arrêt et qui, après s'être écartées initialement et élastiquement lors du montage, s'accrochent derrière le côté de la plaque à circuit imprimé (2) éloigné du composant, de manière à ancrer celui-ci, la patte d'arrêt (13) ou au moins une patte d'arrêt présentant des saillies d'arrêt d'orientation contraire et étant sollicitée en torsion lors du montage, l'axe de torsion (32) étant perpendiculaire au plan de la plaque de support.

13. Commutateur-sélecteur selon une des revendications 1 à 12, caractérisé en ce que les saillies de verrouillage (16a, 16b), au nombre de deux au moins et d'orientation contraire, sont disposées, de manière relativement rigide et immobile, à distance l'une de l'autre, sur des côtés opposés de l'extrémité inférieure de chaque patte d'arrêt (13), conformément à l'orientation d'une fente réceptrice ménagée dans la plaque à circuit imprimé (2), et chaque patte d'arrêt (13) présente, à la position initiale de repos, laquelle correspond à la position d'arrêt après le montage, une orientation tournée par rapport à l'étendue longitudinale de la fente réceptrice.

14. Commutateur-sélecteur selon la revendication 12 ou 13, caractérisé en ce que les saillies de verrouillage (16a, 16b), au nombre de deux au moins et qui sont disposées à distance l'une de l'autre sur des côtés mutuellement opposés d'une tige de la patte d'arrêt, sont orientées suivant des directions diamétralement opposées par leurs protubérances de verrouillage.

15. Commutateur-sélecteur selon une des revendications 12 à 14, caractérisé en ce que les faces des saillies d'arrêt adjacentes aux parois de la fente longitudinale réceptrice de la plaque à circuit imprimé (2) ont une orientation oblique telle que, lors du montage, les saillies de verrouillage (16a, 16b) glissent par leurs faces obliques (18), d'orientation contraire, le long des parois de la fente réceptrice, en imprimant à la patte d'arrêt une torsion croissante par rapport à la position en rotation d'origine de la patte, chaque patte d'arrêt (13) tournant ensuite en arrière, à partir de sa position tordue produite par le montage, pendant que les saillies d'arrêt s'accrochent en mêmes temps derrière des zones opposées et mutuellement espacées de la face arrière de la plaque de support.

16. Commutateur-sélecteur selon une des revendications 12 à 15, caractérisé en ce que des épaississements ou bourrelets (24), dirigés transversalement, sont agencés dans la partie terminale de la patte d'arrêt (13) portant les saillies de verrouillage (16a, 16b), épaississements ou bourrelets qui, à l'état de repos encliqueté de chaque patte d'arrêt (13), positionnent cette patte au milieu dans la fente réceptrice par leur application sans jeu contre les parois de cette fente.

17. Commutateur-sélecteur selon une des revendications 12 à 16, caractérisé en ce que les pattes d'arrêt (13) sont fixées extérieurement au composant ou à son boîtier (3) par des tiges et par l'intermédiaire d'appendices transversaux situés en haut, de sorte que les pattes ont une longueur plus grande, laquelle garantit l'aptitude à la torsion.

18. Commutateur-sélecteur selon une des revendications 12 à 17, caractérisé en ce que chaque patte d'arrêt (13) possède en section droite une forme rectangulaire et se rétrécit vers le haut.

19. Commutateur-sélecteur selon une des revendications 12 à 18, caractérisé en ce que des bras élastiques (23) sont disposés sur le composant et/ou sur le boîtier (3) recevant le composant, bras qui, à l'état encliqueté, exercent une pression vers le bas du fait de leur précontrainte.

20. Commutateur-sélecteur selon la revendication 19, caractérisé en ce que les bras élastiques (23) s'étendent horizontalement, sont formés d'un seul tenant par moulage par injection sur le composant ou le boîtier (3) et dépassent, à l'état de repos, d'une surface de délimitation inférieure du composant par une protubérance, de manière qu'ils s'appliquent sous précontrainte sur la surface de la plaque de support à l'état encliqueté.

21. Procédé pour monter un commutateur-sélecteur sur une plaque à circuit imprimé (2) d'un appareil électrique, en particulier d'un appareil ménager, qui est de préférence équipé d'une commande par microprocesseur, le commutateur-sélecteur étant constitué d'un dispositif de commutation stationnaire préfixant la configuration de départ ou les états de commutation possibles et d'un dispositif de manoeuvre rotatif (5) préfixant l'état de commutation choisi chaque fois, le dispositif de manoeuvre (5) étant entouré d'un boîtier (3),
caractérisé par les étapes suivantes:
- placement sur la plaque à circuit imprimé (2) du dispositif de manoeuvre, lequel comprend au moins une diode électroluminescente pour montage en surface et au moins un photodétecteur (7) pour montage en surface, dont les directions principales d'entrée/sortie du rayonnement sont perpendiculaires au plan de la plaque à circuit imprimé,
- soudage de la diode électroluminescente et du photodétecteur (7) selon un procédé de soudage à l'infrarouge en lui-même connu, et
- montage du dispositif de manoeuvre (5) ou du boîtier (3), réalisé comme un élément de codage interposé dans la marche des rayons du dispositif d'émission/réception de la lumière, un élément réfléchissant ou conduisant la lumière, élément qui influence le trajet lumineux entre le dispositif d'émission de lumière et le dispositif de réception de lumière, étant placé à l'intérieur du boîtier (3) ou sur le dispositif de manoeuvre (5).
